# EUROPEAN PATENT APPLICATION

(11) **EP 3 308 867 A1**
(43) Date of publication of application: **18.04.2018**
(21) Application number: 17196211.1
(22) Date of filing: 12.10.2017
(51) Int. Cl.: B09C 1/02, C02F 3/00

(54) **DEVICE AND SYSTEM FOR PRODUCING GROUNDWATERFLOW**

(30) Priority: 13.10.2016 NL 2017619
(71) Applicant: Strukton Milieutechniek B.V., 4824 AN Breda (NL)
(72) Inventor: Govers, Chantal Johanna Hendrika Maria, 2381 Weelde (BE); Hillemans, Diederik Joseph Maria, 4847 EJ Teteringen (NL); Lodewikus, Remco Antonius Jacobus, 4812 CP Breda (NL)
(74) Representative: Nederlandsch Octrooibureau

(57) **Abstract**

The present invention relates to a device for producing groundwater flow, comprising a flow channel having a flow passage for allowing a liquid to flow through and a liquid pump for pumping the liquid through the flow passage. The present invention also relates to a system comprising said device.

## Description

### Field

The present invention relates to a device for producing groundwater flow, comprising a flow channel having a flow passage for allowing a liquid to flow through and a liquid pump for pumping the liquid through the flow passage. The present invention also relates to a system comprising said device.

### Prior art

Groundwater pollution arises for many reasons, such as handling substances carelessly, waste from industries, former gas plants, petrol stations and underground tanks, but also due to an incident. Water treatment plants for reversing groundwater pollution and limiting the direct consequences thereof are known from the prior art.

In-situ remediation treats polluted ground(water) on site, without any excavation, earth moving or removal and treatment at another site being carried out. To this end, there are known devices for producing groundwater flow. Known devices for groundwater flow comprise a plurality of underground flow channels for infiltration or extraction of groundwater.

These known devices require a plurality of boreholes for wells for the purpose of infiltration or extraction. A further problem of these known devices is that an above-ground network of pumps, pipes and other devices is required, which takes up a relatively large amount of space.

### Object of the invention

It is an object of the invention to provide a device for groundwater flow which solves the above-mentioned problems. It is a further object of the invention to reduce the number of necessary boreholes for wells for the purpose of infiltration and extraction and to reduce the number of pumps and connecting pipes required.

### Description of the invention

This object is achieved using a device according to the invention, as described in claim 1. The device is characterized in that a plurality of channel sections are defined in the flow channel for allowing a liquid to flow in or flow out, wherein at least one channel section is configured to allow a liquid to flow into the flow channel and at least one channel section is configured to allow a liquid to flow out of the flow channel. In addition, the plurality of channel sections comprise, in the flow direction, an extraction section for allowing a fluid (liquid or soil gas or air) to flow into the flow channel and an infiltration section for allowing a liquid to flow out of the flow channel. The extraction section comprises extraction means for allowing a fluid comprising ground liquid and/or gas present in the soil to flow in, and the infiltration section comprises infiltration means arranged downstream of the extraction means for allowing at least a part of the liquid and/or the extracted fluid to flow out.

As a result of the fact that a single flow channel is configured for both the extraction and infiltration of an underground layer, a plurality of flow channels arranged underground are not required. As a result, there are also fewer pumps and connecting pipes needed, likewise the number of boreholes needed for wells for the purpose of infiltration and extraction. One of the advantages of this is that the device has a positive effect on the time schedule, on environmental effects, on damage to the environment, on transport, on costs and on possible remediation deadlines. This also has the advantage that few mechanical parts are present in the device and there is low power consumption. In addition, the device can be used at various locations and can be used for a variety of pollution in the soil. This has yet the further advantage that, in addition to remediation, the invention can also be applied to other techniques such as geothermal exchange and groundwater level management.

The plurality of channel sections also comprise a well extraction section downstream of the infiltration section for allowing a liquid to flow into the flow channel. The well extraction section comprises well extraction means for allowing a well liquid to flow in.

In particular, the extraction means comprise a funnel device having a funnel constriction for constricting the flow passage in the flow direction, a side flow passage defined between the funnel device and the casing of the flow channel, wherein the side flow passage issues into the flow passage of the flow channel downstream and an extraction passage arranged substantially upstream of the funnel constriction for allowing a ground liquid to flow into the side flow passage, wherein the extracted fluid and the liquid form a mixture in the flow passage. The funnel constriction is a constriction which is deliberately arranged in a flow channel for liquid. As a result of the fact that the liquid increases in velocity in the funnel constriction, this creates a reduction in pressure at that location which is comparable to a Venturi effect. As a result, the fluid comprising liquid and/or gas can be sucked into the side passage.

More particularly, the infiltration means comprise an infiltration passage arranged downstream of the extraction section for allowing at least a part of the mixture to flow out. Preferably, the extraction passage and/or the infiltration passage is configured as a perforated surface in the casing of the flow channel.

More preferably, the well extraction means comprise a separating element arranged downstream of the infiltration means for separating the infiltration section and the well extraction section, wherein the separating element extends at right angles to a longitudinal direction of the flow channel and an extraction passage for allowing the liquid to flow into the well extraction section, wherein the well extraction section is connected to an input connection of the liquid pump for pumping up the liquid. In particular, the well extraction passage is configured as a perforated surface in the casing of the flow channel.

Still more preferably, the device comprises a well pipe arranged in the flow channel for connecting the well extraction section to the input connection, wherein the well pipe is provided coaxially with the longitudinal direction.

One embodiment relates to the above-mentioned device, comprising filtration means for filtration of the mixture flowing out. In particular, the filtration means are provided near an infiltration passage for allowing the mixture to flow out.

Preferably, the filtration means comprise biodegradable granules, wherein the granules comprise bacteria and nutrients. The bacteria may be aerobic or anaerobic bacteria. Impregnating bacteria into biodegradable granules together with nutrients allows them to be released into the groundwater over a relatively long period. As a result of the fact that the bacteria are released in a dosed manner together with the right nutrients, the device is very maintenance-friendly and reliable.

More preferably, the device comprises supply means for supplying filtration means and/or aerating means for aerating the circulated liquid into the flow channel. In particular, these means are located above ground.

One embodiment relates to the above-mentioned device, further comprising at least one or more of the following: a heating element for heating the liquid, a flow meter for measuring the flow rate through the flow passage and/or a flow regulator for regulating the flow rate through the flow passage, wherein the flow regulator may be configured as a valve.

Another embodiment relates to the above-mentioned device, wherein the flow channel comprises a channel constriction between the extraction section and the infiltration section. Yet another embodiment relates to the above-mentioned device, wherein the flow channel is made from PVC.

In addition, the invention relates to a system comprising said device and a sensor for monitoring an underground liquid. Preferably, in order to provide greater insight when monitoring contamination in the soil and groundwater or protecting important water catchment areas, a physical, biological and/or chemical property of the underground liquid is monitored. In one embodiment, the sensor may measure/monitor at different depths.

One embodiment relates to the above-mentioned device, wherein the sensor comprises means for the real-time exchange of data with a central database. This provides a client with real-time information on the state of the biological conditions in the soil and the potential contamination. As a result, it is possible to pump in a targeted manner or take further samples to determine the course of the remediation. In practice, this will often mean that fewer samples will be taken and analysed.

One embodiment relates to the above-mentioned device, wherein the sensor is configured to actuate the pump as a function of a value determined by the sensor. Preferably, the determined value relates to a physical, biological and/or chemical property of the underground liquid.

It should be noted that biodegradable pollution may be present in the groundwater at various locations. These are often difficult to reach and these areas of pollution move through the soil, which may cause risks to the environment, for example in drinking water catchment areas. Merely injecting bacteria often does not provide a solution because these bacteria are carried away by the groundwater flow. As a result, it is also necessary to once again inject extra nutrients and/or repeat the injection(s) several times.

The invention also relates to a device for filtration of underground liquid, comprising filtration means for filtration of the liquid. The device is characterized in that the filtration means comprise biodegradable granules, wherein the granules comprise bacteria and nutrients. Impregnating bacteria into biodegradable granules together with nutrients allows them to be released into the groundwater over a relatively long period. As a result of the fact that the bacteria are released in a dosed manner together with the right nutrients, the device is very maintenance-friendly and reliable.

Preferably, the granules are provided near an infiltration passage for allowing the mixture to flow out.

One embodiment relates to the above-mentioned device, comprising a device for producing groundwater flow. Preferably, the device for producing groundwater flow is the above-mentioned device. By using forced groundwater flow with the aid of extraction and infiltration, the dosage of the bacteria can be optimized.

In addition, the invention relates to a system for filtration of underground fluid which comprises liquid and gas present in the soil, comprising an above-mentioned device and a sensor for monitoring the underground fluid.

In addition, the invention relates to a method for the biodegradation of pollution in groundwater using an above-mentioned device/system for producing groundwater flow. The method comprises the step of filtration of the groundwater with biodegradable granules, wherein the granules comprise bacteria and nutrients.

In addition, the invention relates to the use of biodegradable granules for a device for groundwater remediation, wherein the granules comprise bacteria and nutrients, for filtration of groundwater.

### Brief description of the drawing

The invention will be explained in more detail below with reference to an exemplary embodiment illustrated in the drawing.

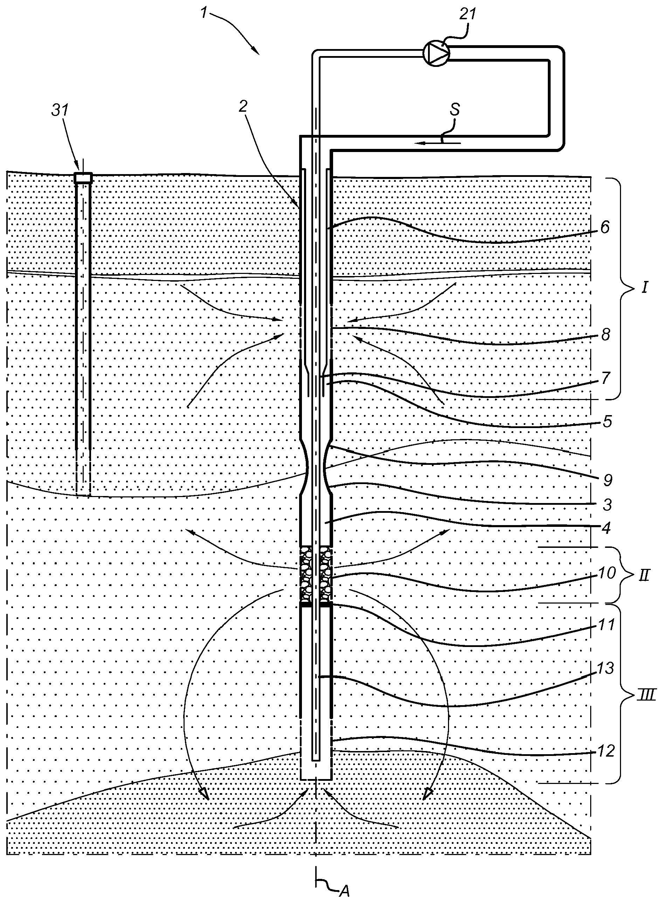

Figure 1 shows a diagrammatic cross section of a device according to the present invention during use.

### Detailed description

Figure 1 shows a device 1 according to the present invention in a possible operating position. The device 1 comprises a flow channel 2 arranged in the ground, having a substantially tubular casing 3 and a flow passage 4 for allowing a liquid to flow through. The flow channel may be configured as a cylinder, wherein a base surface of the cylinder has a polygonal, circular or other suitable shape. The device 1 also comprises a liquid pump 21 for pumping the liquid through the flow passage 4 in a flow direction S. The liquid may, for example, be groundwater.

A plurality of channel sections for allowing a liquid to flow in or flow out are defined in the flow channel 2. In the flow direction S, viewed from the ground surface, the plurality of channel sections comprise an extraction section I for allowing a liquid and/or gas, for example soil gas or air present in the soil, to flow into the flow channel 2, an infiltration section II for allowing a liquid, or liquid-gas mixture, to flow out of the flow channel 2 and a well extraction section III for allowing a liquid to flow into the flow channel 2.

The extraction section I comprises extraction means for allowing a ground liquid and/or gas present in the soil to flow in. The extraction means comprise a funnel device 6 having a funnel constriction 7 for constricting the flow passage 4 in the flow direction S, a side flow passage 5 defined between the funnel device 6 and the casing 3 of the flow channel, wherein the side flow passage 5 issues into the flow passage 4 of the flow channel downstream, and an extraction passage 8 arranged substantially upstream of the funnel constriction 7 for allowing a ground liquid and/or gas present in the soil to flow into the side flow passage 5. Downstream of the funnel device 6, the flow passage 4 flows through the funnel device 6 and the side flow passage 5 also flows in the flow passage 4. The liquid from the flow passage and the extracted ground liquid and/or gas from the side flow passage form a mixture in the flow passage 4.

The flow channel 2 may comprise a channel constriction 9 between the extraction section I and the infiltration section II.

The infiltration section II comprises infiltration means arranged downstream of the extraction means for allowing at least a part of the liquid and/or the extracted ground liquid and/or gas to flow out. The infiltration means comprise an infiltration passage 10 arranged downstream of the extraction section I for allowing at least a part of the mixture to flow out.

In one embodiment, the device is provided near the infiltration passage with biodegradable granules (G) for filtration of the mixture, wherein the granules comprise bacteria and nutrients. Preferably, the device can be provided with means for refilling the granules.

In addition, there may also be assistive technologies which accelerate remediation processes. By heating the soil, much of the pollution becomes more mobile and can be removed more quickly. Heating the soil is possible, inter alia, by means of electricity (electro-reclamation) or by means of steam injection (steam-enhanced extraction).

The well extraction section III, which is located downstream of the infiltration section II, comprises well extraction means for allowing a well liquid to flow in. The well extraction means comprise a separating element 11 arranged downstream of the infiltration means for separating the infiltration section II and the well extraction section III, wherein the separating element 11 extends at right angles to a longitudinal direction A of the flow channel. The well extraction means also comprise an extraction passage 12 for allowing the liquid to flow into the well extraction section III, wherein the well extraction section III is connected via a well pipe 13 to an input connection of the liquid pump 21 for pumping up the liquid. The well pipe 13 can preferably be arranged in the flow channel 2 coaxially with the longitudinal direction A of the flow channel.

During use of the device 1, the liquid pump 21 pumps liquid originating from the well extraction section III through the flow channel 2 in the flow direction S. In the extraction section I, the liquid will flow through the funnel device 6 with the funnel constriction 7. As a result of the fact that the liquid increases in velocity in the funnel constriction, this creates a reduction in pressure at that location. As a result, a ground liquid and/or gas present in the soil is sucked into the side flow passage 5 via the extraction passage 8. The liquid from the flow passage 4 and the ground liquid and/or gas from the side flow passage 5 form a mixture. This mixture flows through the flow passage 4 to the infiltration section II via a channel constriction 9. In the infiltration section II, the mixture flows through the biodegradable granules (G) into the ground outside the flow channel via the infiltration passage 10. Since liquid and/or gas is extracted from the ground via the extraction passage 8 and liquid is extracted via the well extraction passage 12, flows arise from the infiltration passage 10 to both extraction passages 8, 12. As a result, groundwater flows can be produced which have a positive effect on the distribution and dosage of potentially present filtration means in the groundwater, with the aid of a single pump installation in combination with a single filter for both liquid and gaseous media.

In one embodiment, the device as described above comprises a heating element for heating the liquid in the flow passage 4.

In one embodiment, the device as described above comprises a flow meter for measuring the flow rate through the flow passage 4.

In one embodiment, the device as described above comprises a flow regulator for regulating the flow rate through the flow passage 4.

In one embodiment, the flow channel of the device as described above is made from PVC.

Alternative and equivalent embodiments of the present invention are conceivable within the concept of the invention, as will be clear to a person skilled in the art. The concept of the invention is limited only by the accompanying claims.

## Claims

1. Device (1) for producing groundwater flow, comprising
- a flow channel (2) to be arranged in the ground, having a casing (3) and a flow passage (4) for allowing a liquid to flow through,
- a liquid pump (21) for pumping the liquid through the flow passage (4) in a flow direction S,
wherein:
a plurality of channel sections (I, II, III) are defined in the flow channel (2) for allowing a liquid to flow in or flow out, wherein at least one channel section is configured to allow a liquid to flow into the flow channel (2) and at least one channel section is configured to allow a liquid to flow out of the flow channel (2); in the flow direction S, the plurality of channel sections (I, II, III) comprise an extraction section (I) for allowing a liquid to flow into the flow channel (2) and an infiltration section (II) for allowing a liquid to flow out of the flow channel (2),
wherein the extraction section (I) comprises extraction means for allowing a ground liquid and/or gas present in the soil to flow in, and
wherein the infiltration section (II) comprises infiltration means arranged downstream of the extraction means for allowing a fluid comprising at least a part of the liquid and/or the extracted ground liquid and/or the extracted gas to flow out, and
the plurality of channel sections (I, II, III) comprise a well extraction section (III) downstream of the infiltration section (II) for allowing a liquid to flow into the flow channel (2),
wherein the well extraction section (III) comprises well extraction means for allowing a well liquid to flow in.

2. Device (1) according to claim 1, the extraction means comprising:
- a funnel device (6) having a funnel constriction (7) for constricting the flow passage (4) in the flow direction S,
- a side flow passage (5) defined between the funnel device (6) and the casing (3) of the flow channel, wherein the side flow passage (5) issues into the flow passage (4) of the flow channel downstream, and
- an extraction passage (8) arranged substantially upstream of the funnel constriction (7) for allowing ground liquid and/or gas present in the soil to flow into the side flow passage (5), wherein the ground liquid and/or the gas present in the soil and the liquid form a mixture in the flow passage (4) as the fluid.

3. Device (1) according to claim 1 or claim 2, wherein the infiltration means comprise an infiltration passage (10) arranged downstream of the extraction section (I) for allowing at least a part of the mixture to flow out.

4. Device (1) according to one of the preceding claims 1-3, wherein the well extraction means comprise:
- a separating element (11) arranged downstream of the infiltration means for separating the infiltration section (II) and the well extraction section (III), wherein the separating element (11) extends at right angles to a longitudinal direction A of the flow channel, and
- an extraction passage (12) for allowing the liquid to flow into the well extraction section (III), wherein the well extraction section (III) is connected to an input connection of the liquid pump (21) for pumping up the liquid.

5. Device (1) according to claim 4, further comprising a well pipe (13) arranged in the flow channel for connecting the well extraction section (III) to the input connection, wherein the well pipe (13) is provided coaxially with the longitudinal direction A of the flow channel.

6. Device (1) according to one of the preceding claims 1-5, comprising filtration means for filtration of the liquid, the extracted ground liquid and/or the extracted gas and/or the mixture.

7. Device (1) according to claim 6, wherein the filtration means comprise biodegradable granules, wherein the granules comprise bacteria and nutrients.

8. Device (1) according to claim 6 or claim 7, comprising supply means for supplying filtration means into the flow channel.

9. Device (1) according to one of the preceding claims 1-8, wherein the flow channel (2) comprises a channel constriction (9) between the extraction section (I) and the infiltration section (II).

10. Device (1) according to claim 7, wherein the granules are provided near an infiltration passage for allowing the fluid to flow out.

11. Device (1) according to one of the preceding claims 1-10, wherein the device is configured for the filtration of underground fluid which comprises liquid and/or gas present in the soil, comprising filtration means for filtration of the fluid.

12. System, comprising
- a device according to one of the preceding claims 1-11, and
- a sensor (31) for monitoring an underground liquid.

13. System according to claim 12, wherein a physical, biological and/or chemical property of the underground liquid is monitored by the sensor (31).

14. System according to claim 12 or claim 13, wherein the sensor comprises means for the real-time exchange of data with a central database,
and/or the sensor (31) is configured to actuate the pump (21) as a function of a value determined by the sensor.

15. Method for the biodegradation of pollution in groundwater using a device according to one of claims 1-11 or a system according to one of claims 12-14, comprising the step of filtration of the groundwater with biodegradable granules, wherein the granules comprise bacteria and nutrients
